(19) Europäisches Patentamt
European Patent Office
Office européen des brevets

(11) **EP 3 285 900 B1**

(12) **EUROPÄISCHE PATENTSCHRIFT**

(45) Veröffentlichungstag und Bekanntmachung des Hinweises auf die Patenterteilung:
**19.07.2023 Patentblatt 2023/29**

(21) Anmeldenummer: **16720998.0**

(22) Anmeldetag: **25.04.2016**

(51) Internationale Patentklassifikation (IPC):
**B01D 21/24** (2006.01)   **B01D 21/34** (2006.01)
**G05D 9/12** (2006.01)

(52) Gemeinsame Patentklassifikation (CPC):
**B01D 21/2444; B01D 21/34**

(86) Internationale Anmeldenummer:
**PCT/AT2016/050112**

(87) Internationale Veröffentlichungsnummer:
**WO 2016/168880 (27.10.2016 Gazette 2016/43)**

(54) **VERFAHREN ZUM ABZUG VON WASSER AUS EINEM BECKEN**

METHOD FOR DRAINING WATER FROM A TANK

PROCÉDÉ SERVANT À ÉVACUER L'EAU D'UN BASSIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2015 AT 503262015**

(43) Veröffentlichungstag der Anmeldung:
**28.02.2018 Patentblatt 2018/09**

(73) Patentinhaber: **Wett, Bernhard**
**6020 Innsbruck (AT)**

(72) Erfinder: **Wett, Bernhard**
**6020 Innsbruck (AT)**

(74) Vertreter: **Babeluk, Michael**
**Florianigasse 26/3**
**1080 Wien (AT)**

(56) Entgegenhaltungen:
EP-A1- 1 731 487    CN-U- 202 003 236
FR-A- 645 285       US-A- 5 009 261
US-A- 5 540 257

**Beschreibung**

Die Erfindung betrifft ein Verfahren zum Abzug von Wasser aus einem Becken, insbesondere aus einem Klärbecken, gemäß dem Oberbegriff von Patentanspruch 1.

Der Abzug von Wasser aus Klärbecken wird typischerweise über Abzugsvorrichtungen geführt, die mechanisch betätigbare Verschlusselemente aufweisen, wie etwa Ventile, Schieber oder dergleichen. Solche Verschlusselemente sind in Anbetracht der im Wasser enthaltenen Verunreinigungen aufwändig und störanfällig.

Aus der EP 0 979 668 A ist ein schwimmender Abzug für Kläranlagen nach dem SBR-Prinzip bekannt, bei denen ein Schwimmkörper vorgesehen ist, der an einem Gelenkparallelogramm aufgelegt ist, um sich an den veränderlichen Flüssigkeitsspiegel anpassen zu können. Der Abzug von Wasser aus diesem Schwimmkörper kann dabei durch selektive Zufuhr von Druckluft gesteuert werden. Auch diese Vorrichtung ist aufwändig und wartungsintensiv.

Aus der EP 1 731 487 A, der US 5,009,261 A, der US 5,540,257 A und der FR 645 285 A sind verschiedene Abzugsvorrichtungen bekannt, die über das Einblasen von Druckluft steuerbar sind. Diese sind jedoch aufwändig herstellbar und anfällig für Verschmutzung.

Die vorliegende Erfindung hat die Aufgabe, ein Verfahren und eine Vorrichtung anzugeben, die diese Nachteile vermeiden und die es ermöglichen, zyklische Prozesse in Kläranlagen in einfacher und kostengünstiger Weise darzustellen, indem der Abzug von Wasser weitestgehend frei von mechanischen Betätigungen gesteuert wird.

Erfindungsgemäß ist ein solches Verfahren durch die Merkmale von Patentanspruch 1 gekennzeichnet.

Druckluft bedeutet in diesem Zusammenhang Luft, die unter einem geringen Überdruck steht, der ausreicht, um den Flüssigkeitsspiegel im Sperrvolumen auf ein Niveau unterhalb des Flüssigkeitsspiegels im übrigen Becken abzusenken. Im Idealfall strömt dabei keine Luft aus dem Sperrvolumen über die Abzugskante in das Becken aus, wodurch der Luftverbrauch minimal gehalten wird. Eine geringfügige Ausströmung von Luft ist allerdings für das erfindungsgemäße Verfahren nicht schädlich. Typischerweise liegt der Überdruck der Druckluft in einem Bereich zwischen 5 mbar und 100 mbar. Die erforderliche Druckluft kann entweder direkt über einen Verdichter erzeugt und in das Sperrvolumen eingepresst werden, oder die erforderliche Luftmenge wird unter dem notwendigen Mindestdruck in einem Druckwindkessel vorgehalten und bei Bedarf in das Sperrvolumen eingepresst. Mit Hilfe eines Druckwindkessels ist es möglich eine Luftpumpe mit sehr geringer Leistung einzusetzen, ohne die Wirksamkeit der Vorrichtung zu beeinträchtigen. Eine weitere Möglichkeit liegt in der Nutzung eines vorhandenen Beckenbelüftungssystems, wobei mittels des hydrostatischen Drucks auf die in einem Becken getauchten Belüfter der notwendige Einpressdruck gesteuert über ein Ventil eingebracht wird.

Ein wesentlicher Aspekt des erfindungsgemäßen Verfahrens besteht darin, dass es auf diese Weise möglich ist, den Flüssigkeitsspiegel im Becken im Wesentlichen konstant zu halten, gleichzeitig jedoch wahlweise Wasser abzuziehen oder den Abzug zu unterbrechen. Wird Druckluft in das Sperrvolumen eingebracht, dann verhindert dieses das Einströmen von Wasser in die Abzugsöffnung. In diesem Fall wird der Flüssigkeitsspiegel beispielsweise dadurch reguliert, dass ein Zulauf in ein anderes Becken erfolgt. In diesem Zusammenhang können geringfügige Schwankungen des Flüssigkeitsspiegels auftreten, wobei allerdings die Volumenveränderung des Beckeninhalts geringfügig ist.

Wird das Sperrvolumen entlüftet, dann kann das Wasser frei in die Abzugsöffnung einströmen und wird so aus dem Becken abgezogen, wobei der Abzug spätestens dann beendet, wenn der Flüssigkeitsspiegel auf die Höhe der Abzugsöffnung fällt.

In einer bevorzugten Ausführungsvariante des erfindungsgemäßen Verfahrens ist jedoch vorgesehen, dass das abgezogene Wasser über einen Syphonbogen in einen Überlaufraum mit einem Überlaufwehr einströmen gelassen wird, über das das Wasser frei abfließen kann. Auf diese Weise wird der Flüssigkeitsspiegel im Becken durch die Höhe des Überlaufwehrs bestimmt und liegt im Normalbetrieb dauerhaft oberhalb der Abzugsöffnung. In einer weiteren Ausführungsvariante wird der Syphonbogen bis zum Bereich der Sollhöhe des Beckenwasserspiegels hochgezogen und der freie Abfluss der Flüssigkeit erfolgt über die Rohrüberlaufkante.

Ist festzuhalten, dass der Flüssigkeitsspiegel im Becken oben dargestellt weitgehend konstant ist, d.h. allenfalls im Bereich weniger Zentimeter schwankt. Im Gegensatz dazu ist es wichtig, dass der Flüssigkeitsspiegel im Sperrvolumen in Abhängigkeit von der Druckluftzufuhr relativ starken Schwankungen unterworfen ist, nämlich zwischen einer Höhe oberhalb und einer Höhe unterhalb der Abzugsöffnung.

Die Erfindung betrifft auch eine Abzugsvorrichtung zum Abzug von Wasser aus einem Becken, insbesondere aus einem Klärbecken, mit einem im Becken eingetauchten Ablaufeinrichtung, die mindestens eine Abzugsöffnung aufweist, die sich in das Becken öffnet, wobei die Ablaufeinrichtung durch eine Abdeckung nach oben abgeschlossen ist, um zwischen der Ablaufeinrichtung und der Abdeckung ein Sperrvolumen zu bilden, und wobei eine Einrichtung zur wahlweisen Zufuhr von Druckluft in das Sperrvolumen vorgesehen ist.

Erfindungsgemäß ist diese Vorrichtung dadurch gekennzeichnet, dass die Abzugsvorrichtung fest im Becken angebracht ist.

Die erfindungsgemäße Vorrichtung kommt damit - abgesehen von etwaigen Druckluftventilen - ohne mechanisch bewegliche Bauteile aus.

Im weiteren ist bei der vorliegenden Erfindung ist vorgesehen, dass die Ablaufeinrichtung als ein waagrecht angeordnetes Abzugsrohr ausgebildet ist, und dass die Abzugsöffnung an dessen Oberseite angeordnet ist. Diese Weise ist es möglich, Wasser mit sehr geringen Strömungsgeschwindigkeiten beispielsweise über wesentliche Teile einer Seite des Beckens abzuziehen, da das Rohr in beliebiger Länge ausgeführt werden kann.

Dabei ist die Abdeckung als zum Abzugsrohr konzentrischer Körper ausgebildet, der an seiner Unterseite mindestens eine Abzugskante aufweist, so dass vorzugsweise zwischen dem Abzugsrohr und dem Körper ein Ringraum mit im Wesentlichen gleichmäßiger Dicke gebildet ist. Der konzentrische Körper ist somit beispielsweise als Halbschale eines Abzugsrohres ausgeführt. Es hat sich herausgestellt, dass die sich im Ringraum ausbildende ungestörte laminare Strömung eine sehr selektive Regelung des ausströmenden Wassers ermöglicht. Eine besonders hohe Effizienz ist dann gegeben, wenn, zwei zueinander parallele Abzugskanten vorgesehen sind, die vorzugsweise in gleicher Höhe angeordnet sind.

Wie bereits oben ausgeführt hat es sich als günstig herausgestellt, wenn die Abzugsöffnung unterhalb eines konstant zu haltenden Flüssigkeitsspiegel angeordnet ist. Dies stellt neben der Abzugskante einen zusätzlichen Schutz gegenüber dem Einzug von Schwimmkörpern dar. Besonders vorteilhaft ist es in diesem Zusammenhang, wenn die Ablaufeinrichtung direkt mit einem durch ein Überlaufwehr abgeschlossenen Überlaufraum verbunden ist. Die Höhe des Überlaufwehrs ist somit für den Flüssigkeitsspiegel im Becken maßgeblich.

Die Wartung und Instandhaltung der Abzugseinrichtung kann insbesondere dadurch wesentlich erleichtert werden, dass die Abdeckung anhebbar oder entfernbar ausgeführt ist.

Um einen gleichmäßigen Flüssigkeitsabzug entlang der Längsachse der Abzugseinrichtung sicherzustellen, können die Abstände der Abzugsöffnungen gestaffelt werden. Die Abstände der Öffnungen sollten mit der Nähe zu Syphonbogen zunehmen, um den Druckhöhenverlust im Abzugsrohr in Fließrichtung zu kompensieren. Eine alternative Möglichkeit besteht in der Verringerung der Öffnungsquerschnittsflächen bei gleichbleibenden Öffnungsabständen.

Eine weitere günstige Ausführungsvariante der vorliegenden Erfindung sieht ein Ablassventil zum Entlüften der Abdeckung vor. Durch das Entlüften wird der Abzug von Wasser veranlasst.

Alternativ dazu kann ein Dreiwegeventil zum Einbringen, Entlüften bzw. Halten der Druckluft in die/der Abdeckung vorgesehen sein.

Bei entsprechend großen Becken können mehrere Ablaufeinrichtungen vorgesehen sind, die vorzugsweise eine lineare Struktur bilden. Dabei kann die Ansteuerung der einzelnen Ablaufeinrichtungen einzelnen oder gemeinsam erfolgen. Alternativ dazu können die Ablaufeinrichtungen auch eine ringförmige Struktur ausbilden. So kann beispielsweise ein kreisförmiges Becken im Randbereich mit einer konzentrisch angeordneten Anordnung von Ablaufeinrichtungen versehen werden.

In der Folge wird die vorliegende Erfindung anhand der in den schematischen Zeichnungen gezeigten Ausführungsbeispiele näher erläutert. Es zeigen:

Fig. 1     eine erfindungsgemäße Abzugseinrichtung im Schnitt;

Fig. 2     die Abzugseinrichtung von Fig. 1 in einer Draufsicht;

Fig. 3     eine alternative Ausführungsvariante in einer Draufsicht;

Fig. 4     ein Detail von Fig. 1;

Fig. 5     eine Darstellung entsprechend Fig. 1, erklärend die Ausbreitung des Luftposters beim Befüllen des Sperrvolumens;

Fig. 6     eine Darstellung entsprechend Fig. 1, erklärend das Erreichen des Druckgleichgewichts nach Befüllung des Sperrvolumens;

Fig. 7     eine nicht erfindungsgemäße Ausführungsvariante ohne Abdeckung;

Fig. 8     die Ausführungsvariante von Fig. 7 mit Luftpolster im Abzugsrohr und Syphonbogen bei maximalem Füllstand im Becken;

Fig. 9     die Ausführungsvariante von Fig. 7 im Längsschnitt mit Schwelle und gestaffelten Abständen der Abzugsöffnungen.

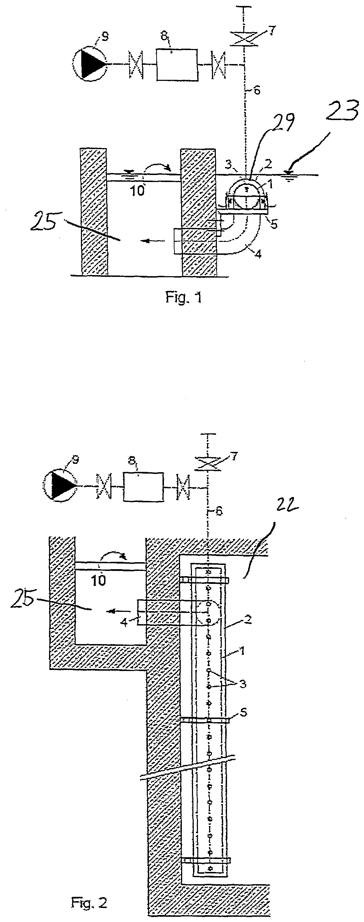

Die Abzugseinrichtung der Fig. 1 und Fig. 2 besteht aus einer Ablaufeinrichtung in der Form eines Abzugsrohres 1 mit waagerechte Achse, das vollständig unterhalb des Flüssigkeitsspiegels in einem Becken 22 auf einer fest angebrachten Konsole 5 angeordnet ist. An der Oberseite des Abzugsrohres 1 ist eine Vielzahl von Abzugsöffnungen 3 vorgesehen. Das Abzugsrohr 1 ist durch eine Abdeckung 2 in der Form einer Rohrhalbschale konzentrisch abgedeckt, so dass sich zwischen dem Abzugsrohr 1 und der Abdeckung 2 ein Ringraum ergibt.

Das in das Abzugsrohr 1 eingedrungene Wasser wird über eine mit dem Abzugsrohr 1 verbundene Druckleitung bzw. Syphonbogen 4 in einen Überlaufraum 25 geführt, der durch ein Überlaufwehr 10 abgeschlossen ist.

Druckluft kann über eine Druckluftleitung 6 in den Ringraum eingebracht werden, wobei die Druckluft durch einen Kompressor 9 erzeugt wird, der mit einem Druckwindkessel 8 verbunden ist. Ventile 7 steuern die Zufuhr und Abfuhr von Druckluft.

Ist das Ablaufwehr zu tief eingestellt, dann kann der Wasserspiegel 23 bis zur Höhe der Einströmöffnungen 3 absinken. Ein weiteres Absinken ist bei geöffnetem Luftablassventil nicht möglich, da durch die Entlüftung des Hochpunktes sich kein Unterdruck aufbauen kann und daher der Behälter nicht nach dem Heberprinzip weiter entleert werden kann. Eine Erhöhung des Wasserspiegels 23 über das Niveau der Einströmöffnungen ist dann nur möglich, wenn der Druckluftpolster im Ringraum wieder unter das Niveau der Einströmöffnungen herabreicht und der hydrostatische Druck auf beiden Seiten des Druckposters gleich ist. D.h. die Wasserspiegeldifferenz zulaufseitig zwischen Beckenwasserspiegel 23 und dem unteren Rand des Luftpolsters im Ringraum ist gleich der Wasserspiegeldifferenz ablaufseitig zwischen dem Wasserspiegel im Ablaufschacht und dem Wasserspiegel im Abzugsrohr. D.h. bei steigendem Wasserspiegel 23 im Becken 22 muss durch zusätzlichen Lufteintrag in den Bereich des Abzugsrohrs 1 die ablaufseitige Wasserspiegeldifferenz entsprechend vergrößert werden oder das Ablaufwehr erhöht werden.

Die Abzugseinrichtung eignet sich am besten für zyklische Abwasserbehandlungsverfahren mit weitgehend konstantem Wasserspiegel. Insbesondere sind hier Verfahren angesprochen, bei denen der Zulauf altenierend zwischen parallelen Becken geführt wird und dieser Zulauf das Überstandswasser bei annähernd konstantem Wasserspiegel aus dem Becken verdrängt.

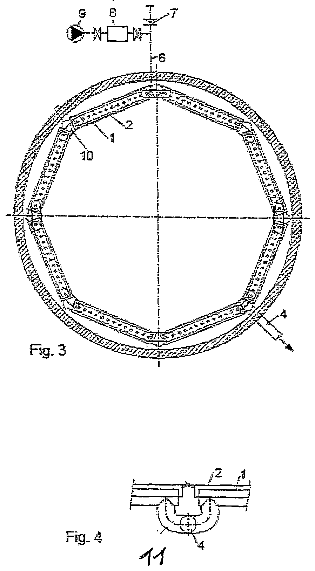

In der Fig. 3 ist eine Variante mit ringförmiger Anordnung von Abzugsrohren 1 dargestellt, die durch entsprechende Verbindungsstücke 10 miteinander verbunden sind.

Die Fig. 4 zeigt im Detail die Anbindung des Druckrohrs 4 im Bereich eines Verbindungsstücks 11 zwischen zwei Abzugsrohren 1.

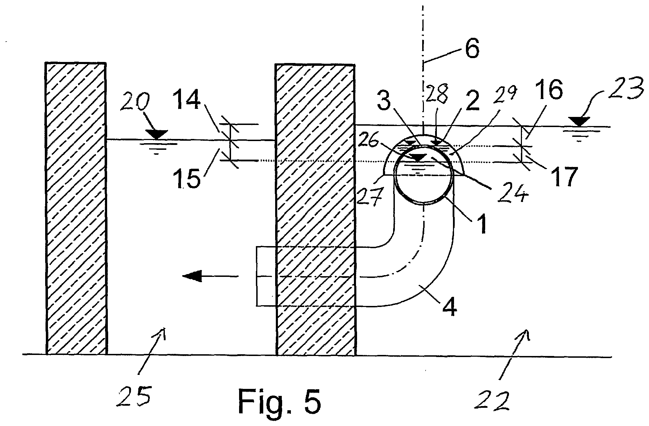

In Fig. 5 wird die Dynamik beim Befüllen des Sperrvolumens 24 dargestellt:

Dabei werden folgende Höhenunterschiede zur Erklärung dargestellt:

14: Höhendifferenz zwischen dem Wasserspiegel 20 im Überlaufraufraum 25 und dem Wasserspiegel 23 im Becken 22.

15: Höhendifferenz zwischen dem Wasserspiegel 26 im Rohr 1 und dem Wasserspiegel 20 im Überlaufraufraum 25.

16: Höhendifferenz zwischen dem Wasserspiegel 28 im Ringraum 29 und dem Wasserspiegel 23 im Becken 22.

17: Höhendifferenz zwischen dem Wasserspiegel 26 im Rohr 1 und dem Wasserspiegel 28 im Ringraum 29.

Während dem Abziehen der Flüssigkeit liegt infolge der Reibungsverluste in der Abzugsvorrichtung der Wasserstand 20 beim Wehrüberfall niederer als im Becken 22. Dann wird das Sperrvolumen 24 über die Druckluftleitung 6 am Scheitel der Abdeckung mit Druck ($p_{com}$) befüllt. Der Luftpolster breitet sich von dort aus und erreicht die Abzugsöffnungen und verhindert ein weiteres Einströmen der Flüssigkeit. Es bildet sich ein Gleichgewicht zwischen der hydrostatischen Druckhöhe 15

$$(p_{in} = \varrho_w * g * h_{in})$$

auf den Luftposter von der Innenseite vom Syphonbogen 4 und der Druckhöhe 16

$$(p_{ex} = \varrho_w * g * h_{ex})$$

auf den Luftpolster von der Außenseite vom Becken. Die beiden hydrostatischen Drücke sind also unter Vernachlässigung des Gewichtes des Luftpolsters gleich groß und der Überdruck der Pressluft muss diesen Gegendruck überwinden. Die Höhendifferenz 17 dieser beiden hydrostatischen Druckflächen entspricht der Höhendifferenz 14 zwischen Beckenwasserspiegel 23 und Überlaufhöhe 20. Analog sind auch die Höhendifferenzen 15 und 16 gleich.

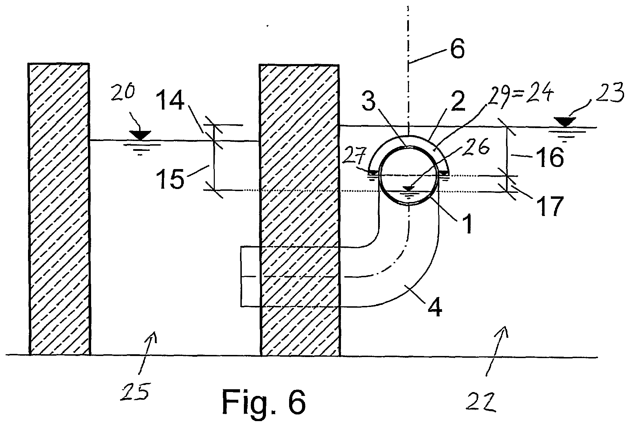

In Fig. 6 wird das Erreichen eines stationären Druckgleichgewichts gezeigt. Der Luftpolster reicht an der Außenseite bis zu den Abzugskanten und überschüssige Luft steigt zur Beckenoberfläche auf. An der Innenseite reicht der Luftpolster soweit in das Abzugsrohr bzw. in den Syphonbogen 4, so dass auch hier die Druckhöhe 15 bis zur Überlaufhöhe 20 der Höhendifferenz 16 zwischen Abzugskante 27 und Beckenwasserspiegel 23 entspricht.

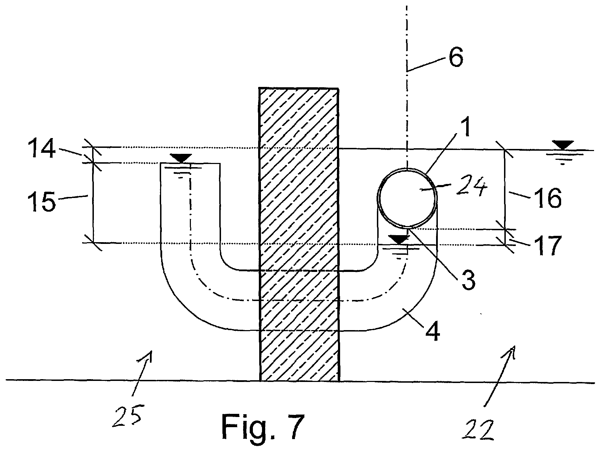

Fig. 7 zeigt eine Ausführungsvariante ohne Abdeckung. Dabei wird die Druckluft direkt in den Scheitel des Abzugsrohres 1 eingepresst und der Luftpolster reicht dann bis zu den an der Rohrunterseite angebrachten Abzugsöffnungen 3 und überschüssige Druckluft entweicht über diese Abzugsöffnungen 3.

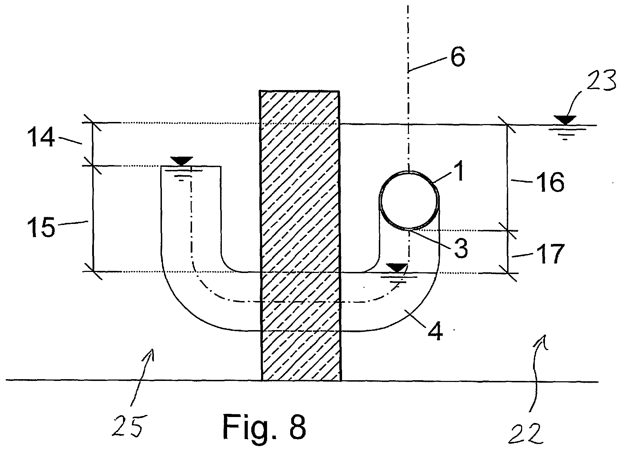

In Fig. 8 wird die maximal mögliche Beckenfüllhöhe bei vorgegebenen Syphon- und Überlaufhöhen angezeigt. Dabei drückt der maximale Beckenwasserspiegel das befüllte Sperrvolumen 24 bis zum Erreichen der minimalen Durchgangshöhe des Syphonbogens 4 und zusätzliche Druckluft kann in Richtung Überlauf entweichen.

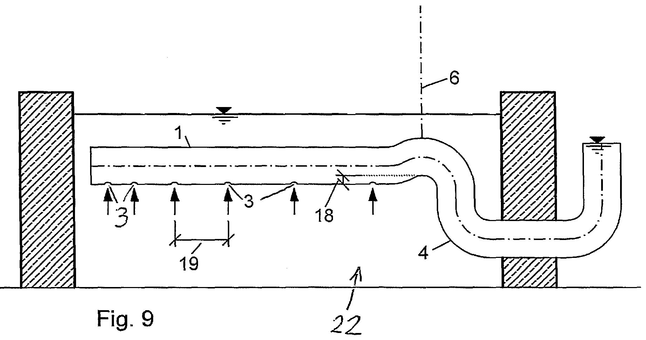

In Fig. 9 wird ein Längsschnitt durch die Abzugseinrichtung ohne Abdeckung (s. Fig. 7 und Fig. 8) gezeigt. Durch die Anordnung einer Schwelle mit der Höhe 18 werden Wassereintritte infolge Druckschwankungen z.B. durch Belüftung im Becken verhindert. Die gestaffelten Abstände 19 der Abzugsöffnungen 3 sollen bei steigender Eintrittsgeschwindigkeit entlang der Längsachse der Abzugseinrichtung den Flüssigkeiteinzug vergleichmäßigen.

Die vorliegende Erfindung ermöglicht es, den Abzug von Wasser aus Klärbecken oder dergleichen sehr einfacher Weise robust zu steuern.

## Patentansprüche

1. Verfahren zum Abzug von Wasser aus einem Becken (22), insbesondere aus einem Klärbecken, bei dem bei Aufrechterhaltung eines im Wesentlichen konstanten Flüssigkeitsspiegels (23) wahlweise der Abzug von Wasser über eine Abzugsvorrichtung vorgesehen ist, indem die Zufuhr von Druckluft in ein Sperrvolumen (24) gesteuert wird, das oberhalb von mindestens einer Abzugsöffnung (3) einer fest im Becken (22) angebrachten Ablaufeinrichtung (1) vorgesehen ist, **dadurch gekennzeichnet, dass** die Ablaufeinrichtung (1) als waagrecht angeordnetes Abzugsrohr mit einer dazu konzentrischen Abdeckung (2) ausgebildet ist, an dessen Oberseite die Abzugsöffnung (3) angeordnet ist, und das durch die Abdeckung (2) nach oben abgeschlossen wird, dass die Abdeckung (2) an ihrer Unterseite mindestens eine Abzugskante (27) aufweist, und dass zwischen dem Abzugsrohr (1) und der Abdeckung (2) ein das Sperrvolumen (24) bildender Ringraum (29) mit im Wesentlichen gleichmäßiger Dicke gebildet ist.

2. Verfahren nach Anspruch 1, **dadurch gekennzeichnet, dass** der Abzug von Wasser unterbrochen wird, indem ausreichend Druckluft in das Sperrvolumen (24) eingebracht wird, um den Flüssigkeitsspiegel (23) im Sperrvolumen (24) auf ein Niveau unterhalb der Abzugsöffnung (3) abzusenken.

3. Verfahren nach Anspruch 1 oder 2, **dadurch gekennzeichnet, dass** der Abzug angesteuert wird, indem Druckluft aus dem Sperrvolumen (24) abgelassen wird, um den Flüssigkeitsspiegel (23) im Sperrvolumen (24) auf ein Niveau oberhalb der Abzugsöffnung (3) anzuheben.

4. Verfahren nach einem der Ansprüche 1 bis 3, **dadurch gekennzeichnet, dass** das abgezogene Wasser in einen Überlaufraum (25) mit einem Überlaufwehr (10) einströmen gelassen wird, über das das Wasser frei abfließen kann.

5. Verfahren nach einem der Ansprüche 1 bis 4, **dadurch gekennzeichnet, dass** die Abzugsöffnung (3) unterhalb eines konstant zu haltenden Flüssigkeitsspiegels (23) angeordnet wird.

6. Verfahren nach einem der Ansprüche 1 bis 5, **dadurch gekennzeichnet, dass** der Abstand zwischen einem Überlaufwehr und dem Scheitel eines Syphonbogens (4) mindestens so groß ist wie der Abstand zwischen Abzugskante und dem maximalen Wasserspiegel.

7. Verfahren nach einem der Ansprüche 1 bis 6, **dadurch gekennzeichnet, dass** ein gleichmäßiger Einzug der Flüssigkeit in die Abzugseinrichtung durch eine Erweiterung der Abstände (19) der Abzugsöffnungen (3) in Fließrichtung im Abzugsrohr (1) oder durch Verringerung der Öffnungsweiten der Abzugsöffnungen (3) in Fließrichtung im Abzugsrohr (1) erreicht wird.

8. Abzugsvorrichtung zum Abzug von Wasser aus einem Becken (22), insbesondere aus einem Klärbecken, mit einer im Becken (22) eingetauchten Ablaufeinrichtung (1), die mindestens eine Abzugsöffnung (3) aufweist, die sich in das Becken (22) öffnet, wobei eine Einrichtung zur wahlweisen Zufuhr von Druckluft in ein Sperrvolumen (24) vorgesehen ist, wobei die Abzugsvorrichtung fest im Becken (22) angebracht ist, **dadurch gekennzeichnet, dass** die Ablaufeinrichtung als waagrecht angeordnetes Abzugsrohr (1) ausgebildet ist, an dessen Oberseite die Abzugsöffnung (3) angeordnet ist und das durch die Abdeckung (2) nach oben abgeschlossen wird, und dass die Abdeckung (2) als zum Abzugsrohr (1) konzentrischer Körper ausgebildet ist, der an seiner Unterseite mindestens eine Abzugskante (27) aufweist, und dass zwischen dem Abzugsrohr (1) und dem Körper ein Ringraum (29) mit im Wesentlichen gleichmäßiger Dicke gebildet ist, wobei zwischen der Ablaufeinrichtung (1) und der Abdeckung (2) das Sperrvolumen (24) gebildet ist.

9. Abzugsvorrichtung nach Anspruch 8, **dadurch gekennzeichnet, dass** die Ablaufeinrichtung (1) über einen Syphonbogen (4) mit einem durch ein Überlaufwehr abgeschlossenen Überlaufraum (25) verbunden ist.

10. Abzugsvorrichtung nach einem der Ansprüche 8 oder 9, **dadurch gekennzeichnet, dass** die Abdeckung (2) anhebbar oder entfernbar ausgeführt ist.

11. Abzugsvorrichtung nach einem der Ansprüche 8 bis 10, **dadurch gekennzeichnet, dass** ein Ablassventil (7) zum Entlüften des Sperrvolumens (24) vorgesehen ist.

12. Abzugsvorrichtung nach einem der Ansprüche 8 bis 11, **dadurch gekennzeichnet, dass** ein Dreiwegeventil zum Einbringen, Entlüften bzw. Halten der Druckluft im Sperrvolumen (24) vorgesehen ist.

13. Abzugsvorrichtung nach einem der Ansprüche 8 bis 12, **dadurch gekennzeichnet, dass** zwei zueinander parallele Abzugskanten vorgesehen sind, die vorzugsweise in gleicher Höhe angeordnet sind.

14. Abzugsvorrichtung nach einem der Ansprüche 8 bis 13, **dadurch gekennzeichnet, dass** mehrere Ablaufeinrichtungen (1) vorgesehen sind, die vorzugsweise eine ringförmige Struktur bilden.

15. Abzugsvorrichtung nach einem der Ansprüche 8 bis 14, **dadurch gekennzeichnet, dass** eine Schwelle im Abzugsrohr (1) mindestens so hoch ist wie die zu erwartenden Druckhöhenschwankungen im Becken (22).

**Claims**

1. Method for the drainage of water from a tank (22), in particular from a clarification tank, in which, while maintaining a substantially constant liquid level (23), the drainage of water is optionally provided via a draining apparatus by controlling the supply of compressed air into a blocking volume (24) which is provided above at least one draining opening (3) of a discharge device (1) which is fixedly mounted in the tank (22), **characterised in that** the discharge device (1) is designed as a horizontally arranged drainage pipe having a cover (2) concentric therewith, on the upper side of which the drainage opening (3) is arranged and which is closed off at the top by the cover (2), **in that** the cover (2) has at least one draining edge (27) on its underside, and **in that** an annular space (29) which forms the blocking volume (24) and has essentially uniform thickness is formed between the drainage pipe (1) and the cover (2).

2. Method according to claim 1, **characterised in that** the drainage of water is interrupted by introducing sufficient compressed air into the blocking volume (24) in order to lower the liquid level (23) in the blocking volume (24) to a level below the drainage opening (3).

3. Method according to claim 1 or 2, **characterised in that** the drainage is triggered by discharging compressed air from the blocking volume (24) in order to raise the liquid level (23) in the blocking volume (24) to a level above the drainage opening (3).

4. Method according to one of claims 1 to 3, **characterised in that** the drained water is allowed to flow into an overflow space (25) with an overflow weir (10), via which the water can flow off freely.

5. Method according to one of claims 1 to 4, **characterised in that** the drainage opening (3) is arranged below a liquid level (23) which is to be kept constant.

6. Method according to one of claims 1 to 5, **characterised in that** the distance between an overflow weir and the apex of a siphon bow (4) is at least as great as the distance between the drainage edge and the maximum water level.

7. Method according to one of claims 1 to 6, **characterised in that** a uniform drawing-in of the liquid into the draining device is achieved by an expansion of the distances (19) of the drainage openings (3) in the flow direction in the drainage pipe (1) or by reducing the opening widths of the drainage openings (3) in the flow direction in the drainage pipe (1).

8. Draining apparatus for the drainage of water from a tank (22), in particular from a clarification tank, comprising a discharge device (1) immersed in the tank (22) and having at least one drainage opening (3) which opens into the tank (22), wherein a device is provided for selectively supplying compressed air into the blocking volume (24), wherein the draining apparatus is fixedly mounted in the tank (22), **characterised in that** the discharge device is designed as a horizontally arranged drainage pipe (1) on the upper side of which the drainage opening (3) is arranged and which is closed off at the top by the cover (2), and **in that** the cover (2) is designed as a body which is concentric with the drainage pipe (1) and has at least one draining edge (27) on its underside, and **in that** an annular space (29) of essentially uniform thickness is formed between the drainage pipe (1) and the body, wherein the blocking volume (24) is formed between the discharge device (1) and the cover (2).

9. Draining apparatus according to claim 8, **characterised in that** the discharge device (1) is connected via a siphon bow (4) to an overflow space (25) which is sealed by an overflow weir.

10. Draining apparatus according to one of claims 8 or 9, **characterised in that** the cover (2) is designed to be liftable or removable.

11. Draining apparatus according to one of claims 8 to 10, **characterised in that** a bleed valve (7) is provided for venting the blocking volume (24).

12. Draining apparatus according to one of claims 8 to 11, **characterised in that** a three-way valve is provided for introducing, venting or maintaining the compressed air in the blocking volume (24).

13. Draining apparatus according to one of claims 8 to 12, **characterised in that** two mutually parallel draining edges are provided, which are preferably arranged at the same height.

14. Draining apparatus according to one of claims 8 to 13, **characterised in that** a plurality of discharge devices (1) are provided, which preferably form an annular structure.

15. Draining apparatus according to one of claims 8 to 14, **characterised in that** a threshold in the drainage pipe (1) is at least as high as the pressure level fluctuations to be expected in the tank (22).

**Revendications**

1. Procédé d'extraction d'eau d'un bassin (22), notamment d'un bassin de décantation,
   selon lequel

   en maintenant un niveau de liquide (23) pratiquement constant, on extrait sélectivement de l'eau par un dispositif d'extraction commandant l'alimentation en air comprimé d'un volume de blocage (24), au-dessus d'au moins un orifice d'extraction (3) d'une installation d'écoulement (1) fixe, prévue dans le bassin (22),
   procédé **caractérisé en ce que**

   - l'installation d'écoulement (1) est sous la forme d'un tuyau d'extraction horizontal, muni d'une couverture concentrique (2) et dont le dessus est muni de l'orifice d'extraction (3) fermé vers le haut par la couverture (2),
   - la couverture (2) ayant dans son dessous au moins une arête d'extraction (27), et
   - un volume annulaire (29) entre le tube d'écoulement (1) et la couverture (2) forme le volume de blocage (24) d'épaisseur pratiquement constante.

2. Procédé selon la revendication 1,
   **caractérisé en ce que**
   on interrompt l'extraction d'eau en mettant suffisamment d'air comprimé dans le volume de blocage (24) pour abaisser le niveau de liquide (23) en dessous de l'orifice d'extraction (3) dans le volume de blocage (24).

3. Procédé selon la revendication 1 ou 2,
   **caractérisé en ce que**
   on commande l'extraction en laissant s'échapper de l'air comprimé du volume de blocage (24) pour relever le niveau de liquide (23) dans le volume de blocage (24) à un niveau situé au-dessus de l'orifice d'extraction (3).

4. Procédé selon l'une des revendications 1 à 3,
   **caractérisé en ce que**
   l'eau extraite arrive dans un volume de débordement (25) avec un dispositif anti-débordement (10) par-dessus lequel l'eau peut s'écouler librement.

5. Procédé selon l'une des revendications 1 à 4,
   **caractérisé en ce que**
   l'orifice d'extraction (3) est en dessous d'un niveau de liquide (23) maintenu constant.

6. Procédé selon l'une des revendications 1 à 5,
   **caractérisé en ce que**
   la distance entre un dispositif anti-débordement et le sommet d'un coude de siphon (4) est au moins aussi grand que la distance entre l'arête d'extraction et le niveau d'eau maximum.

7. Procédé selon l'une des revendications 1 à 6,
   **caractérisé en ce que**
   on réalise une entrée régulière de liquide dans l'installation d'extraction en agrandissant les intervalles (19) des orifices d'extraction (3) dans la direction d'écoulement dans le tuyau d'extraction (1) ou en réduisant l'ouverture des orifices d'extraction (3) dans la direction d'écoulement dans le tuyau d'extraction (1).

8. Dispositif d'extraction d'eau d'un bassin (22), notamment d'un bassin de décantation (22) comportant :

   - une installation d'écoulement (1) immergée dans le bassin (22) et qui a au moins un orifice d'extraction (3) ouvert dans le bassin (22),
   - une installation d'alimentation sélective d'air comprimé dans un volume de blocage (24),
   - le dispositif d'extraction étant installé de manière fixe dans le bassin (22),

   dispositif d'extraction **caractérisé en ce que**

   - l'installation d'écoulement est sous la forme d'un tuyau d'extraction (1) installé à l'horizontale et dont le dessus comporte l'orifice d'extraction (3) et qui est fermé vers le haut par la couverture (2), et
   - la couverture (2) est réalisée sous la forme d'un corps concentrique au tuyau d'extraction (1) et dont le dessous a au moins une arête d'extraction (27), et
   - un espace annulaire (29) d'épaisseur pratiquement constante est formé entre le tuyau d'extraction (1) et le corps,
   - le volume de blocage (24) étant formé entre l'installation d'écoulement (1) et la couverture (2).

9. Dispositif d'extraction selon la revendication 8,
   **caractérisé en ce que**
   l'installation d'écoulement (1) est reliée par un coude de siphon (4) à un espace de débordement (25) clôturé par une barrière anti-débordement.

10. Dispositif d'extraction selon l'une des revendications 8 ou 9,
    **caractérisé en ce que**
    la couverture (2) est réalisée de façon à pouvoir être relevée ou enlevée.

11. Dispositif d'extraction selon l'une des revendications 8 à 10,
   **caractérisé par**
   une soupape d'évacuation (7) pour laisser s'échapper l'air du volume de blocage (24).

12. Dispositif d'extraction selon l'une des revendications 8 à 11,
   **caractérisé par**
   une vanne à trois voies pour introduire l'air comprimé, évacuer l'air comprimé ou maintenir l'air comprimé dans le volume de blocage (24).

13. Dispositif d'extraction selon l'une des revendications 8 à 12,
   **caractérisé par**
   deux arêtes d'extraction, parallèles, qui sont, de préférence, à la même hauteur.

14. Dispositif d'extraction selon l'une des revendications 8 à 13,
   **caractérisé par**
   plusieurs installations d'écoulement (1) qui constituent, de préférence, une structure annulaire.

15. Dispositif d'extraction selon l'une des revendications 8 à 14,
   **caractérisé par**
   un seuil dans le tuyau d'extraction (1) au moins aussi haut que les variations de niveau de pression prévisibles dans le bassin (22).

Fig. 1

Fig. 2

Fig. 3

Fig. 4

11

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0979668 A
- EP 1731487 A
- US 5009261 A
- US 5540257 A
- FR 645285 A